# FASCICULE DE BREVET EUROPEEN

(11) **EP 3 670 883 B1**
(45) Date de publication et mention de la délivrance du brevet: **24.02.2021**
(21) Numéro de dépôt: 19210185.5
(22) Date de dépôt: 19.11.2019
(51) Int. Cl.: F02K 1/70, F02K 1/72

(54) **NACELLE D'UN TURBOREACTEUR COMPORTANT UN VOLET INVERSEUR ET UN SYSTEME DE DEPLOIEMENT A RETARDEMENT**
GONDEL EINES TURBOTRIEBWERKS, UMFASSEND EINE UMSCHALTKLAPPE UND EIN SYSTEM ZUR VERZÖGERTEN AUSLÖSUNG
TURBOJET NACELLE COMPRISING AN INVERTER FLAP AND A DELAYED DEPLOYMENT SYSTEM

(30) Priorité: 20.12.2018 FR 1873541
(43) Date de publication de la demande: 24.06.2020
(73) Titulaire: AIRBUS OPERATIONS (S.A.S.), 31060 Toulouse (FR)
(72) Inventeur: PAUTIS, Olivier, 31060 TOULOUSE Cedex 9 (FR)
(74) Mandataire: Gicquel, Olivier Yves Gérard

(56) Documents cités:
- EP-A1- 3 530 926
- WO-A1-2015/019007
- US-A- 5 097 662
- US-A- 5 309 711
- US-A- 5 778 659
- US-B1- 7 484 356

## Description

La présente invention concerne une nacelle d'un turboréacteur double flux qui comporte au moins un volet inverseur et un système de déploiement à retardement, un turboréacteur double flux comportant une telle nacelle et un moteur, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur, une nacelle qui est fixée autour du moteur et une veine secondaire qui est entre le moteur et la nacelle et qui permet le passage d'un flux secondaire.

La nacelle comporte un capot fixe et un capot mobile à l'arrière du capot fixe et mobile en translation entre une position avancée et une position reculée. En position avancée, le capot mobile est rapproché du capot fixe et forme une continuité aérodynamique. En position reculée, le capot mobile est éloigné du capot fixe vers l'arrière, et génère une ouverture entre la veine secondaire et l'extérieur.

La nacelle comporte également au moins un volet inverseur qui est mobile entre une position escamotée dans laquelle il est positionné en dehors de la veine secondaire de manière à ne pas faire obstacle au flux secondaire, et une position déployée dans laquelle il est positionné en travers de la veine secondaire de manière à faire obstacle au flux secondaire pour le diriger radialement à travers l'ouverture vers l'extérieur de la nacelle.

Classiquement, comme décrit par exemple dans le brevet US7484356, le volet inverseur est monté mobile en rotation sur la structure de la nacelle et un système de déploiement vient le déplacer de la position escamotée à la position déployée lorsque le capot mobile passe de la position avancée à la position reculée et inversement.

Bien que de tels systèmes de déploiement d'un tel volet inverseur donnent entière satisfaction, il est souhaitable de trouver des systèmes de déploiement différents et en particulier un système de déploiement qui permet de retarder le déploiement du volet inverseur par rapport au déplacement du capot mobile. En outre, il est souhaitable de trouver un système de déploiement qui comporte moins d'organes mécaniques traversant la veine secondaire et permet une optimisation de la forme du capot mobile, en particulier, moins épais et donc un meilleur aérodynamisme de la nacelle.

Un objet de la présente invention est de proposer une nacelle comportant au moins un volet inverseur et un système de déploiement à retardement.

A cet effet, est proposée une nacelle telle que revendiquée à la revendication 1.

La forme particulière de la première glissière permet un décalage entre la translation du capot mobile et la rotation du volet inverseur permettant d'éloigner le volet inverseur vers l'arrière avant qu'il pivote.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig.1 est une vue de côté d'un aéronef comportant une nacelle selon l'invention,
Fig.2 est une vue en coupe par un plan vertical de la nacelle selon l'invention en position avancée et en position escamotée,
Fig.3 est une vue similaire à celle de la Fig. 2 en position reculée et en position escamotée,
Fig.4 est une vue similaire à celle de la Fig. 2 en position reculée et en position intermédiaire,
Fig.5 est une vue similaire à celle de la Fig. 2 en position reculée et en position déployée, et
Fig.6 est un agrandissement du détail VI de la Fig. 5.

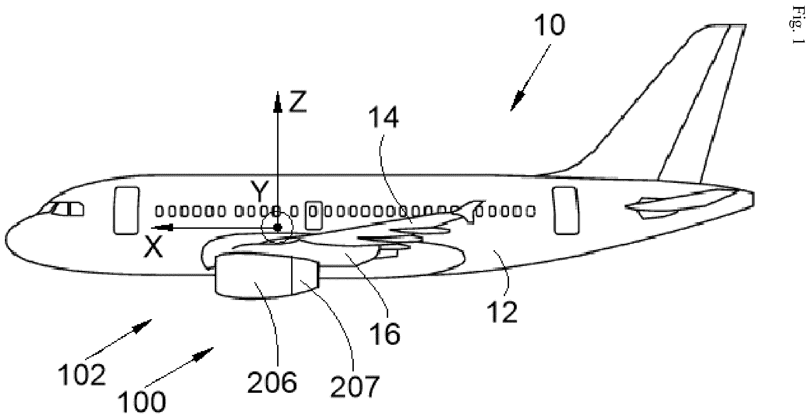

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et qui est orienté positivement dans le sens d'avancement de l'aéronef 10, on appelle Y l'axe transversal du turboréacteur double flux 100 qui est horizontal lorsque l'aéronef est au sol, et Z l'axe vertical lorsque l'aéronef est au sol, ces trois directions X, Y et Z étant orthogonales entre elles.

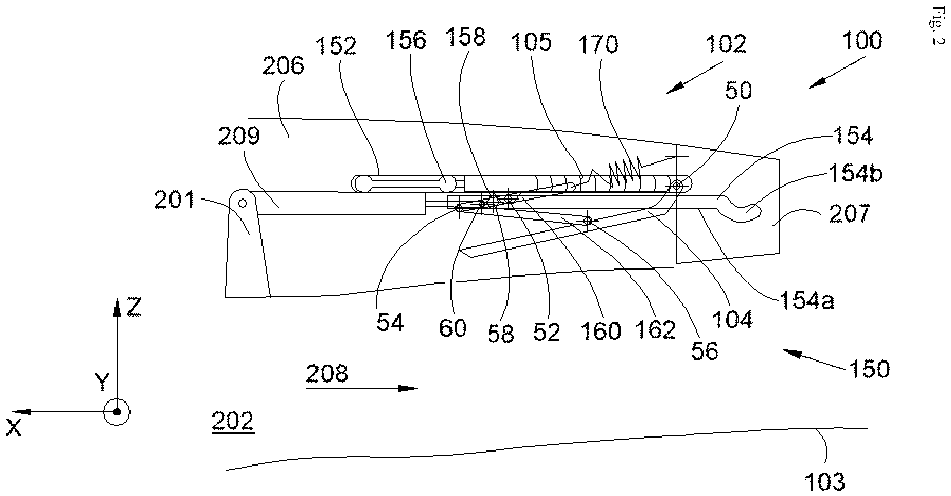

Les Figs. 2 à 5 montrent le turboréacteur double flux 100 qui comporte une nacelle 102 et un moteur 103 qui est logé à l'intérieur de la nacelle 102. Le turboréacteur double flux 100 présente une veine 202 entre la nacelle 102 et le moteur 103 dans laquelle circule le flux secondaire 208. Le moteur 103 est matérialisé ici par sa paroi extérieure.

La nacelle 102 comporte au moins un volet inverseur 104. En particulier, il peut y avoir deux volets inverseurs 104 disposés l'un en face de l'autre, ou une pluralité de volets inverseurs 104 répartis régulièrement sur la périphérie de la nacelle 102 pour obturer la veine aérodynamique 202 sur un secteur donné. Chaque volet inverseur 104 permet selon sa position d'inverser la poussée du turboréacteur double flux 100.

Dans la description qui suit, l'invention est plus particulièrement décrite pour un volet inverseur 104, mais elle s'applique de la même manière pour chaque volet inverseur 104 lorsqu'il y en a plusieurs.

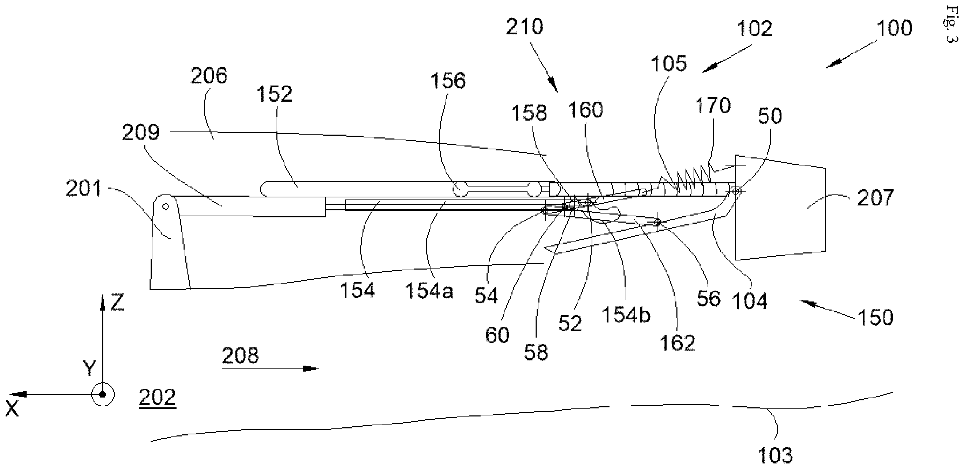

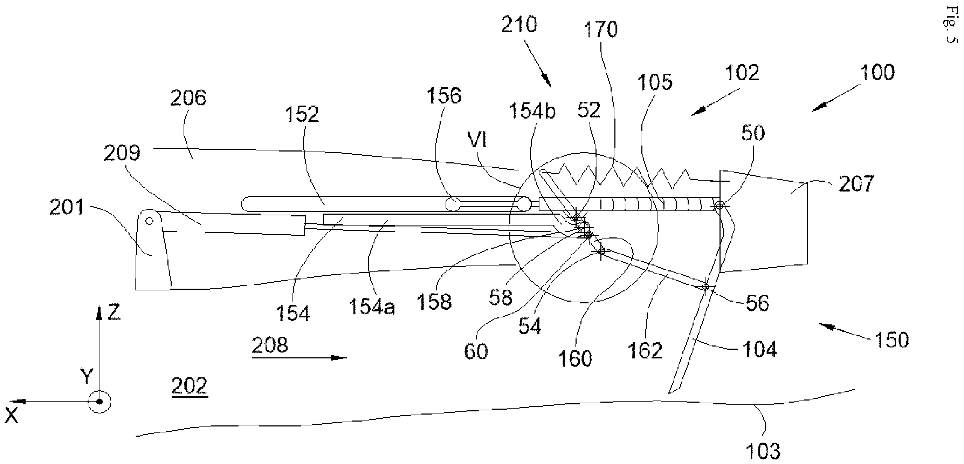

La nacelle 102 présente pour chaque volet inverseur 104, une ouverture 210 (Figs. 3 et 5) ouverte entre la veine 202 et l'extérieur de la nacelle 102. L'ouverture 210 relie ainsi la veine 202 et l'extérieur de la nacelle 102.

La nacelle 102 présente un capot fixe 206 qui délimite l'ouverture 210 en amont par rapport à l'axe longitudinal X et qui est monté fixe sur une structure fixe 201 de la nacelle 102.

La nacelle 102 présente un capot mobile 207 qui délimite l'ouverture 210 en aval par rapport à l'axe longitudinal X. Le capot mobile 207 est monté mobile en translation selon une direction de translation globalement parallèle à l'axe longitudinal X sur la structure fixe 201.

Le capot fixe 206 et le capot mobile 207 présentent chacun une surface extérieure qui constitue l'enveloppe extérieure de la nacelle 102 et une surface intérieure qui constitue une paroi extérieure de la veine 202. La paroi extérieure du moteur 103 constitue une paroi intérieure de la veine 202.

Le capot mobile 207 est mobile entre une position avancée (Fig. 2) dans laquelle il est rapproché du capot fixe 206 et une position reculée (Figs. 3 à 5) dans laquelle il est éloigné du capot fixe 206 vers l'arrière de manière à élargir l'ouverture 210.

La nacelle 102 comporte également au moins un vérin 209 pour déplacer le capot mobile 207 de la position avancée à la position reculée et inversement.

Chaque vérin 209 est commandé par une unité de contrôle, du type processeur, qui commande l'allongement et le raccourcissement du vérin 209 selon les besoins de l'aéronef 10. Chaque vérin 209 présente un cylindre qui est monté articulé sur la structure fixe 201 et une tige mobile en translation.

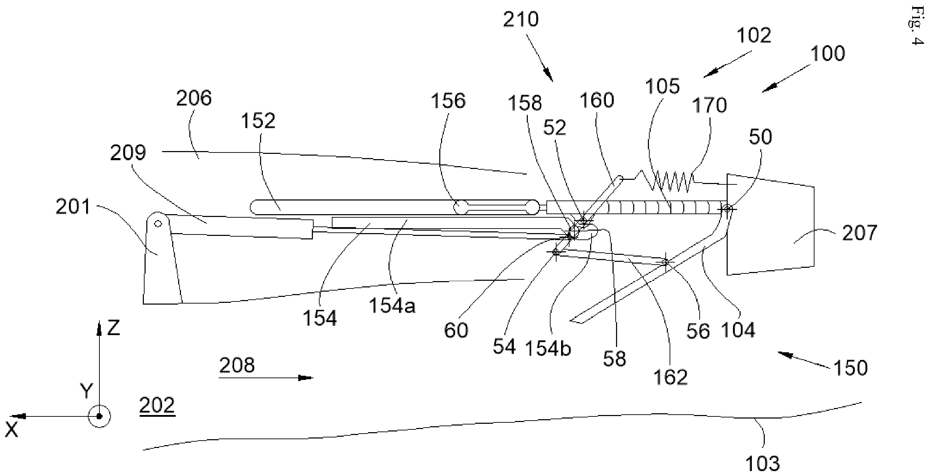

Le volet inverseur 104 est monté mobile en rotation autour d'un axe principal de rotation 50 sur le capot mobile 207 entre une position escamotée (Figs. 2 et 3) et une position déployée (Fig. 5) pour laquelle l'inversion de poussée a une efficacité maximale. La Fig. 4 montre une position intermédiaire entre la position escamotée et la position déployée. Dans le mode de réalisation de l'invention présenté ici, l'axe principal de rotation 50 est perpendiculaire à la direction de translation. L'axe principal de rotation 50 est ici au niveau du bord aval du volet inverseur 104.

En position escamotée, le volet inverseur 104 se positionne en dehors de la veine secondaire 208, et plus particulièrement ici à l'intérieur du capot fixe 206. En position reculée, le capot mobile 207 est déplacé vers l'arrière pour faciliter la manœuvre du volet inverseur 104 qui passe de la position escamotée à la position déployée.

Lorsque le volet inverseur 104 est en position déployée, le volet inverseur 104 vient en travers de la veine 202 et dévie au moins une partie du flux secondaire 208 vers l'extérieur à travers l'ouverture 210.

Le passage de la position escamotée à la position déployée du volet inverseur 104 est coordonné mais différé par rapport au passage de la position avancée à la position reculée du capot mobile 207 et inversement.

Lors du passage de la position escamotée à la position déployée, la rotation du volet inverseur 104 commence lorsque le capot mobile 207 a atteint la position reculée. A l'inverse, lors du passage de la position déployée à la position escamotée, la rotation du volet inverseur 104 s'arrête lorsque le capot mobile 207 quitte la position reculée.

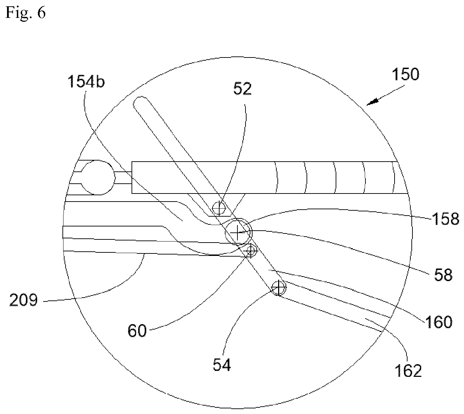

Cette coordination et ce décalage sont assurés par un système de déploiement 150. La Fig. 6 montre un agrandissement d'une partie du système de déploiement 150 selon un mode de réalisation de l'invention. Le système de déploiement 150 comporte :
- un premier coulisseau 156 solidaire du capot mobile 207,
- des moyens de guidage 152 destinés à guider le premier coulisseau 156 en translation parallèlement à la direction de translation par rapport à la structure fixe 201 entre deux positions d'arrêt, l'une correspondant à la position avancée et l'autre à la position reculée,
- une première rainure 154 comportant une première partie 154a parallèle à la direction de translation et une deuxième partie 154b courbe, où la première rainure 154 est solidaire de la structure fixe 201,
- un deuxième coulisseau 158 monté mobile en translation dans la première rainure 154,
- une première bielle 160 montée mobile en rotation sur le premier coulisseau 156 autour d'un premier axe de rotation 52 et comportant une première extrémité, où la première bielle 160 est montée mobile en rotation sur le deuxième coulisseau 158 entre le premier coulisseau 156 et la première extrémité autour d'un deuxième axe de rotation 58, et
- une deuxième bielle 162 dont une première extrémité est montée articulée sur la première extrémité de la première bielle 160 autour d'un troisième axe de rotation 54, et dont une deuxième extrémité est montée articulée sur le volet inverseur 104 autour d'un quatrième axe de rotation 56,
où la tige du vérin 209 est montée articulée sur la première bielle 160, et
où lorsque le premier coulisseau 156 se déplace de la position d'arrêt correspondant à la position avancée à la position d'arrêt correspondant à la position reculée en étant guidé par les moyens de guidage 152, le deuxième coulisseau 158 se déplace le long de la première partie 154a de la première rainure 154 et à partir du moment où le premier coulisseau 156 atteint la position reculée, dite 'en butée arrière', c'est-à-dire l'une des positions d'arrêt, le deuxième coulisseau 158 se déplace le long de la deuxième partie 154b de la première rainure 154.

Inversement, tant que le deuxième coulisseau 158 se déplace le long de la deuxième partie 154b, le premier coulisseau 156 reste en position reculée, et dès que le deuxième coulisseau 158 se déplace le long de la première partie 154a, le premier coulisseau 156 se déplace de la position reculée à la position avancée en étant guidé par les moyens de guidage 152.

Un tel système de déploiement 150 présente également l'avantage d'être entièrement hors de la veine 202, lorsque le capot mobile 207 est en position avancée et lorsque le volet inverseur 104 est en position escamotée.

Le fonctionnement du système de déploiement 150 est alors le suivant, à partir de la position avancée et escamotée :
- la tige du vérin 209 est allongée, ce qui provoque le déplacement en translation du premier coulisseau 156 guidé par les moyens de guidage 152 le long de la structure fixe 201 pour déplacer le capot mobile 207 de la position avancée à la position reculée, dans le même temps, le deuxième coulisseau 158 se déplace le long de la première partie 154a,
- lorsque le premier coulisseau 156 a atteint la position reculée, il est arrêté en translation en position dite 'en butée arrière', l'allongement de la tige du vérin 209 est poursuivi, le deuxième coulisseau 158 se déplace le long de la deuxième partie 154b qui du fait de sa forme courbée, entraîne un déplacement en rotation de la première bielle 160 autour du premier axe de rotation 52, et donc le déploiement de la deuxième bielle 162 et du volet inverseur 104 qui passe de la position escamotée à la position déployée.

Le fonctionnement du système de déploiement 150 est alors le suivant, à partir de la position reculée et déployée :
- la tige du vérin 209 est raccourcie, ce qui provoque le déplacement du deuxième coulisseau 158 le long de la deuxième partie 154b et donc la rotation de la première bielle 160 en sens inverse pour replacer le volet inverseur 104 qui passe de la position déployée à la position escamotée,
lorsque le deuxième coulisseau 158 atteint la première partie 154a, le raccourcissement de la tige du vérin 209 se poursuit, le premier coulisseau 156, guidé par les moyens de guidage 152, se déplace alors le long de la structure fixe 201 pour déplacer le capot mobile 207 de la position reculée à la position avancée et dans le même temps, le deuxième coulisseau 158 se déplace le long de la première partie 154a pour revenir à la position initiale avancée et escamotée.

L'articulation autour du deuxième axe de rotation 58 libère le deuxième coulisseau 158 lors du déplacement de la première bielle 160.

La forme particulière de la première glissière 154 permet un décalage entre la translation du capot mobile 207 et la rotation du volet inverseur 104.

En outre, le système de déploiement 150 est exclusivement en dehors du capot mobile 207 qui peut être dédié au traitement acoustique.

Dans le mode de réalisation de l'invention présenté ici, les moyens de guidage 152 prennent la forme d'une deuxième rainure 152 dans et le long de laquelle coulisse le premier coulisseau 156. La deuxième rainure 152 est disposée selon un axe parallèle à la direction de translation et est solidaire de la structure fixe 201. Les extrémités de la deuxième rainure 152 sont obturées pour limiter le déplacement du premier coulisseau 156 entre lesdites extrémités et déterminer ainsi la position des deux positions d'arrêt.

Dans le mode de réalisation de l'invention présenté ici, la tige du vérin 209 est montée articulée sur la première bielle 160 entre la première extrémité et le deuxième axe de rotation 58 et autour d'un cinquième axe de rotation 60.

Tous les axes de rotation 52, 54, 56, 58 et 60 sont parallèles à l'axe principal de rotation 50.

Dans le mode de réalisation de l'invention présenté sur les Figs. 2 à 5, des cascades 105 sont solidaires du capot mobile 207 et, en position reculée, elles se positionnent en travers de l'ouverture 210 pour orienter au mieux le flux secondaire 208.

Pour faciliter le retour de la première bielle 160 lors du déplacement depuis la position déployée, la première bielle 160 présente une deuxième extrémité qui est de l'autre côté de la première extrémité par rapport au premier axe de rotation 52, et le système de déploiement 150 comporte un système de compensation 170, présenté ici sous forme d'un ressort de traction 170 fixé entre la deuxième extrémité et le capot mobile 207. Le système de compensation 170 agit pendant la phase de déploiement des volets inverseurs 104 dans la veine 202. Le système de compensation 170 compense au moins partiellement les efforts d'écoulement aérodynamique appliqués sur les volets inverseurs 104 et il assiste également le vérin 209 pour le retour des volets inverseurs 104 vers la position escamotée.

## Revendications

1. Nacelle (102) pour un turboréacteur double flux (100), ladite nacelle (102) comportant :
- une structure fixe (201),
- un capot fixe (206) monté fixe sur la structure fixe (201) et un capot mobile (207) qui est mobile en translation par rapport à la structure fixe (201) selon une direction de translation entre une position avancée dans laquelle il est rapproché du capot fixe (206) et une position reculée dans laquelle il est éloigné du capot fixe (206) vers l'arrière pour définir entre eux une ouverture (210) reliant une veine (202) d'un flux secondaire (208) et l'extérieur de la nacelle (102),
- un vérin (209) destiné à déplacer le capot mobile (207) de la position avancée à la position reculée et inversement,
- un volet inverseur (104) monté mobile en rotation autour d'un axe principal de rotation (50) sur le capot mobile (207) entre une position escamotée dans laquelle il se positionne en dehors de la veine secondaire (208) et une position déployée dans laquelle il vient en travers de la veine (202), et
- un système de déploiement (150) prévu pour coordonner et différer le passage de la position escamotée à la position déployée du volet inverseur (104) avec le passage de la position avancée à la position reculée du capot mobile (207) et inversement, ledit système de déploiement (150) comportant :
- un premier coulisseau (156) solidaire du capot mobile (207),
- des moyens de guidage (152) destinés à guider le premier coulisseau (156) en translation parallèlement à la direction de translation par rapport à la structure fixe (201) entre deux positions d'arrêt, l'une correspondant à la position avancée et l'autre à la position reculée,
- une première rainure (154) comportant une première partie (154a) parallèle à la direction de translation et une deuxième partie (154b) courbe, où la première rainure (154) est solidaire de la structure fixe (201),
- un deuxième coulisseau (158) monté mobile en translation dans la première rainure (154), **caractérisée en ce que** le système de déploiement comprend :
- une première bielle (160) montée mobile en rotation sur le premier coulisseau (156) autour d'un premier axe de rotation (52) et comportant une première extrémité, où la première bielle (160) est montée mobile en rotation sur le deuxième coulisseau (158) entre le premier coulisseau (156) et la première extrémité autour d'un deuxième axe de rotation (58), et
- une deuxième bielle (162) dont une première extrémité est montée articulée sur la première extrémité de la première bielle (160) autour d'un troisième axe de rotation (54), et dont une deuxième extrémité est montée articulée sur le volet inverseur (104) autour d'un quatrième axe de rotation (56), et **en ce que** la tige du vérin (209) est montée articulée sur la première bielle (160), et
où lorsque le premier coulisseau (156) se déplace de la position d'arrêt correspondant à la position avancée à la position d'arrêt correspondant à la position reculée en étant guidé par les moyens de guidage (152), le deuxième coulisseau (158) se déplace le long de la première partie (154a) de la première rainure (154) et à partir du moment où le premier coulisseau (156) atteint la position reculée, le deuxième coulisseau (158) se déplace le long de la deuxième partie (154b) de la première rainure (154) qui du fait de sa forme courbée, entraîne un déplacement en rotation de la première bielle (160) autour du premier axe de rotation (52), et donc le déploiement de la deuxième bielle (162) et du volet inverseur (104) qui passe de la position escamotée à la position déployée.

2. Nacelle (102) selon la revendication 1, **caractérisée en ce que** les moyens de guidage (152) prennent la forme d'une deuxième rainure (152) dans et le long de laquelle coulisse le premier coulisseau (156), **en ce que** la deuxième rainure (152) est disposée selon un axe parallèle à la direction de translation et est solidaire de la structure fixe (201), et **en ce que** les extrémités de la deuxième rainure (152) sont obturées pour limiter le déplacement du premier coulisseau (156) entre lesdites extrémités.

3. Nacelle (102) selon l'une des revendications 1 ou 2, **caractérisée en ce que** la tige du vérin (209) est montée articulée sur la première bielle (160) entre la première extrémité et le deuxième axe de rotation (58) et autour d'un cinquième axe de rotation (60).

4. Nacelle (102) selon l'une des revendications 1 à 3, **caractérisée en ce que** tous les axes de rotation (52, 54, 56, 58, 60) sont parallèles à l'axe principal de rotation (50).

5. Nacelle (102) selon l'une des revendications 1 à 4, **caractérisée en ce qu'**elle comporte des cascades (105) solidaires du capot mobile (207) et, **en ce qu'**en position reculée, elles se positionnent en travers de l'ouverture(210).

6. Nacelle (102) selon l'une des revendications 1 à 5, **caractérisée en ce que** la première bielle (160) présente une deuxième extrémité qui est de l'autre côté de la première extrémité par rapport au premier axe de rotation (52), et **en ce que** le système de déploiement (150) comporte un ressort de traction (170) fixé entre la deuxième extrémité et le capot mobile (207).

7. Turboréacteur double flux (100) comportant un moteur (103) et une nacelle (102) selon l'une des revendications précédentes qui entoure le moteur (103), et où la veine (202) est délimitée entre la nacelle (102) et le moteur (103).

8. Aéronef (10) comportant au moins un turboréacteur double flux (100) selon la revendication précédente.

## Patentansprüche

1. Gondel (102) für ein Zweistrom-Turbinenstrahltriebwerk (100), wobei die Gondel (102) Folgendes umfasst:
- eine feste Struktur (201),
- eine feste Abdeckung (206), die fest an der festen Struktur (201) montiert ist, und eine bewegliche Abdeckung (207), die relativ zur festen Struktur (201) in einer Translationsrichtung zwischen einer vorgeschobenen Position, in der sie an die feste Abdeckung (206) angenähert ist, und einer zurückgezogenen Position, in der sie von der festen Abdeckung (206) entfernt ist, nach hinten verschiebbar ist, um zwischen ihnen eine Öffnung (210) zu definieren, die eine Bahn (202) eines Sekundärstroms (208) und das Äußere der Gondel (102) verbindet,
- einen Zylinder (209), der dazu bestimmt ist, die bewegliche Abdeckung (207) von der vorgeschobenen Position in die zurückgezogene Position und umgekehrt zu verschieben,
- eine Umkehrklappe (104), die um eine Hauptdrehachse (50) an der beweglichen Abdeckung (207) zwischen einer eingefahrenen Position, in der sie außerhalb der Sekundärstrombahn (208) positioniert ist, und einer ausgefahrenen Position, in der sie quer zur Bahn (202) verläuft, drehbar montiert ist, und
- ein Ausfahrsystem (150), das dazu vorgesehen ist, den Übergang der Umkehrklappe (104) von der eingefahrenen Position in die ausgefahrene Position mit dem Übergang der beweglichen Abdeckung (207) von der vorgeschobenen Position in die zurückgezogene Position und umgekehrt zu koordinieren und zu verändern, wobei das Ausfahrsystem (150) Folgendes aufweist:
- einen ersten Schlitten (156), der fest mit der beweglichen Abdeckung (207) verbunden ist,
- Führungsmittel (152), die dazu bestimmt sind, den erste Schlitten (156) in Translation parallel zur Translationsrichtung relativ zur festen Struktur (201) zwischen zwei Anschlagpositionen zu führen, von denen eine der vorgeschobenen Position und die andere der zurückgezogenen Position entspricht,
- eine erste Nut (154), die einen zur Translationsrichtung parallelen ersten Teil (154a) und einen gekrümmten zweiten Teil (154b) aufweist, wobei die erste Nut (154) fest mit der festen Struktur (201) verbunden ist,
- einen zweiten Schlitten (158), der in der ersten Nut (154) verschiebbar montiert ist, **dadurch gekennzeichnet, dass** das Ausfahrsystem Folgendes umfasst:
- eine erste Verbindungsstange (160), die am ersten Schlitten (156) um eine erste Drehachse (52) drehbar montiert ist und ein erstes Ende aufweist, wobei die erste Verbindungsstange (160) am zweiten Schlitten (158) zwischen dem ersten Schlitten (156) und dem ersten Ende um eine zweite Drehachse (58) drehbar montiert ist, und
- eine zweite Verbindungsstange (162), von der ein erstes Ende um eine dritte Drehachse (54) gelenkig am ersten Ende der ersten Verbindungsstange (160) montiert ist und von der ein zweites Ende um eine vierte Drehachse (56) gelenkig an der Umkehrklappe (104) montiert ist, und dass die Stange des Zylinders (209) gelenkig an der ersten Verbindungsstange (160) montiert ist und
wobei, wenn sich der erste Schlitten (156) von der der vorgeschobenen Position entsprechenden Anschlagposition in die der zurückgezogenen Position entsprechende Anschlagposition bewegt, indem er durch die Führungsmittel (152) geführt wird, sich der zweite Schlitten (158) entlang des ersten Teils (154a) der ersten Nut (154) bewegt und ab dem Zeitpunkt, zu dem der erste Schlitten (156) die zurückgezogene Position erreicht, sich der zweite Schlitten (158) entlang des zweiten Teils (154b) der ersten Nut (154) bewegt, was aufgrund seiner gekrümmten Form eine Drehbewegung der ersten Verbindungsstange (160) um die erste Drehachse (52) und damit das Ausfahren der zweiten Verbindungsstange (162) und der Umkehrklappe (104) bewirkt, die von der eingefahrenen Position in die ausgefahrene Position übergeht.

2. Gondel (102) nach Anspruch 1, **dadurch gekennzeichnet, dass** die Führungsmittel (152) die Form einer zweiten Nut (152) aufweisen, in der und entlang derer der erste Schlitten (156) gleitet, und dass die zweite Nut (152) entlang einer zur Translationsrichtung parallelen Achse angeordnet und fest mit der festen Struktur (201) verbunden ist, und dass die Enden der zweiten Nut (152) verschlossen sind, um die Verschiebung des ersten Schlittens (156) zwischen den Enden zu begrenzen.

3. Gondel (102) nach einem der Ansprüche 1 oder 2, **dadurch gekennzeichnet, dass** die Stange des Zylinders (209) zwischen dem ersten Ende und der zweiten Drehachse (58) und um eine fünfte Drehachse (60) gelenkig an der ersten Verbindungsstange (160) montiert ist.

4. Gondel (102) nach einem der Ansprüche 1 bis 3, **dadurch gekennzeichnet, dass** alle Drehachsen (52, 54, 56, 58, 60) parallel zur Hauptdrehachse (50) sind.

5. Gondel (102) nach einem der Ansprüche 1 bis 4, **dadurch gekennzeichnet, dass** sie Kaskaden (105) aufweist, die fest mit der beweglichen Abdeckung (207) verbunden sind, und dass sie in der zurückgezogenen Position quer zur Öffnung (210) positioniert sind.

6. Gondel (102) nach einem der Ansprüche 1 bis 5, **dadurch gekennzeichnet, dass** die erste Verbindungsstange (160) ein zweites Ende aufweist, das relativ zur ersten Drehachse (52) auf der anderen Seite des ersten Endes liegt, und dass das Ausfahrsystem (150) eine Zugfeder (170) aufweist, die zwischen dem zweiten Ende und der beweglichen Abdeckung (207) befestigt ist.

7. Zweistrom-Turbinenstrahltriebwerk (100) mit einem Antrieb (103) und einer Gondel (102) nach einem der vorangehenden Ansprüche, die den Antrieb (103) umgibt, wobei die Bahn (202) zwischen der Gondel (102) und dem Antrieb (103) begrenzt ist.

8. Luftfahrzeug (10) mit zumindest einem Zweistrom-Turbinenstrahltriebwerk (100) nach dem vorangehenden Anspruch.

## Claims

1. Nacelle (102) for a turbofan (100), said nacelle (102) having:
- a fixed structure (201)
- a fixed cowl (206) mounted fixedly on the fixed structure (201) and a mobile cowl (207) that is able to move in translation relative to the fixed structure (201) in a direction of translation between an advanced position in which it is moved close to the fixed cowl (206) and a retracted position in which it is moved away from the fixed cowl (206) towards the rear, so as to define between them an opening (210) connecting a duct (202) for a bypass flow (208) and the exterior of the nacelle (102),
- an actuator (209) intended to move the mobile cowl (207) from the advanced position to the retracted position and vice versa
- a reverser flap (104) mounted so as to be able to move in rotation about a main axis of rotation (50) on the mobile cowl (207) between a stowed position in which it is positioned outside the bypass duct (208) and a deployed position in which it is moved across the duct (202), and
- a deployment system (150) provided so as to coordinate and defer the movement of the reverser flap (104) from the stowed position to the deployed position with the movement of the mobile cowl (207) from the advanced position to the retracted position and vice versa, said deployment system (150) having:
- a first slider (156) as one with the mobile cowl (207),
- guide means (152) intended to guide the first slider (156) in translation parallel to the direction of translation relative to the fixed structure (201) between two stop positions, one corresponding to the advanced position and the other to the retracted position,
- a first groove (154) having a first part (154a) parallel to the direction of translation and a curved second part (154b), wherein the first groove (154) is as one with the fixed structure (201),
- a second slider (158) mounted so as to be able to move in translation in the first groove (154), **characterized in that** the deployment system comprises:
- a first connecting rod (160) mounted so as to be able to move in rotation on the first slider (156) about a first axis of rotation (52) and having a first end, wherein the first connecting rod (160) is mounted so as to be able to move in rotation on the second slider (158) between the first slider (156) and the first end about a second axis of rotation (58), and
- a second connecting rod (162) of which a first end is mounted so as to be articulated on the first end of the first connecting rod (160) about a third axis of rotation (54), and of which a second end is mounted so as to be articulated on the reverser flap (104) about a fourth axis of rotation (56), and **in that** the rod of the actuator (209) is mounted so as to be articulated on the first connecting rod (160), and
wherein, when the first slider (156) moves from the stop position corresponding to the advanced position to the stop position corresponding to the retracted position, being guided by the guide means (152), the second slider (158) moves along the first part (154a) of the first groove (154) and, from the moment when the first slider (156) reaches the retracted position, the second slider (158) moves along the second part (154b) of the first groove (154), which, owing to its curved shape, causes a rotational movement of the first connecting rod (160) about the first axis of rotation (52), and therefore the deployment of the second connecting rod (162) and of the reverser flap (104), which moves from the stowed position to the deployed position.

2. Nacelle (102) according to Claim 1, **characterized in that** the guide means (152) take the form of a second groove (152) in and along which the first slider (156) slides, **in that** the second groove (152) is disposed along an axis parallel to the direction of translation and is as one with the fixed structure (201), and **in that** the ends of the second groove (152) are closed off so as to limit the movement of the first slider (156) between said ends.

3. Nacelle (102) according to either of Claims 1 and 2, **characterized in that** the rod of the actuator (209) is mounted so as to be articulated on the first connecting rod (160) between the first end and the second axis of rotation (58) and about a fifth axis of rotation (60).

4. Nacelle (102) according to one of Claims 1 to 3, **characterized in that** all the axes of rotation (52, 54, 56, 58, 60) are parallel to the main axis of rotation (50) .

5. Nacelle (102) according to one of Claims 1 to 4, **characterized in that** it has cascades (105) as one with the mobile cowl (207) and **in that**, in the retracted position, they are positioned across the opening (210).

6. Nacelle (102) according to one of Claims 1 to 5, **characterized in that** the first connecting rod (160) has a second end that is on the other side from the first end relative to the first axis of rotation (52), and **in that** the deployment system (150) has a tension spring (170) fixed between the second end and the mobile cowl (207).

7. Turbofan (100) having a motor (103) and a nacelle (102) according to one of the preceding claims that surrounds the motor (103), and wherein the duct (202) is delimited between the nacelle (102) and the motor (103).

8. Aircraft (10) having at least one turbofan (100) according to the preceding claim.
